# EUROPEAN PATENT APPLICATION

(11) **EP 0 880 272 A2**
(43) Date of publication of application: **25.11.1998**
(21) Application number: 98109239.8
(22) Date of filing: 20.05.1998
(51) Int. Cl.: H04N 1/17

(54) **Method of recognizing printing region**

(30) Priority: 22.05.1997 KR 9719892
(71) Applicant: Samsung Electronics Co., Ltd., Suwon City, Kyungki-do (KR)
(72) Inventor: On, Jae-gyoung, Kangnam-gu, Seoul (KR)
(74) Representative: Reinhard - Skuhra - Weise & Partner

(57) **Abstract**

A method of recognizing a printing region, including the steps of scanning a first block of a document divided into a plurality of blocks; confirming a point of converting black data at a starting point into white data; detecting a point of starting white data of predetermined lines continuously input within a single block; and setting as a scanning starting point a value obtained by subtracting the white data starting point from the number of dots corresponding to a resolution and then adding 1 thereto.

## Description

### BACKGROUND OF THE INVENTION

### Field of the Invention

The present invention relates to a multi-tasking system. More particularly, it relates to a method of recognizing a document size for scanning a text of document only of a shuttle scanner's slidable distance.

### Discussion of Related Art

Various office automation machines have been recently combined into one system. A remarkable progress has been made in a multi-tasking system that is a combination of a printer, a facsimile machine, a copy machine, a scanner, etc.

A multi-tasking system which is capable of serving as an ink-jet printer with a scanner module, will be described referring to the drawings.

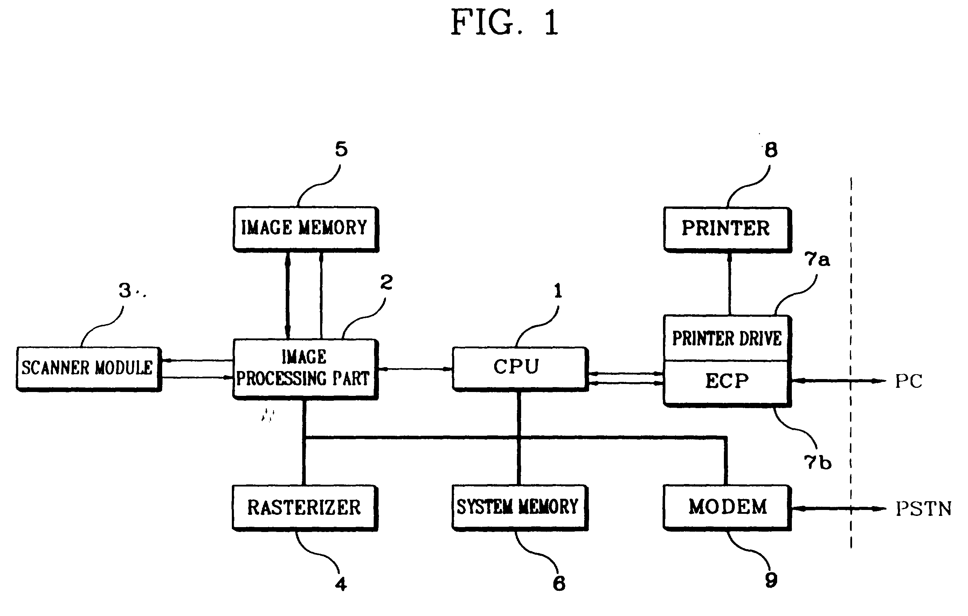

FIG. 1 is a schematic block diagram of a conventional multi-tasking system.

The conventional multi-tasking system includes a central processing unit (CPU) 1 which supervises the operation of the multi-tasking system and a system memory 6 holding a program driving the overall system; an image processing unit 2 which controls image data, input from a shuttle scanner module 3 under the control of CPU 1, in shading, gamma correction, dot per inch (DPI) conversion, edge emphasis, error diffusion, etc.; a modem 9 which modulates or demodulates the processed image data under the control of CPU 1; and an ECP 7-2 that controls PC printing and facsimile printing.

The conventional multi-tasking system also includes a rasterizer 4 which rasterizes image data in block; an image memory 5 which is a buffer memory used for processing image data; a system memory 6 that consists of an erasable and programmable read only memory (EPROM) holding the overall system program and a static random access memory (SRAM) used for processing system data; and a printer driver 7-1 which controls a print head, a carriage motor, and a line feed motor, and handles printing data. The above ECP 7-2 is a module for direct parallel interface, and either transmits scanned data to the PC or receives data from the PC.

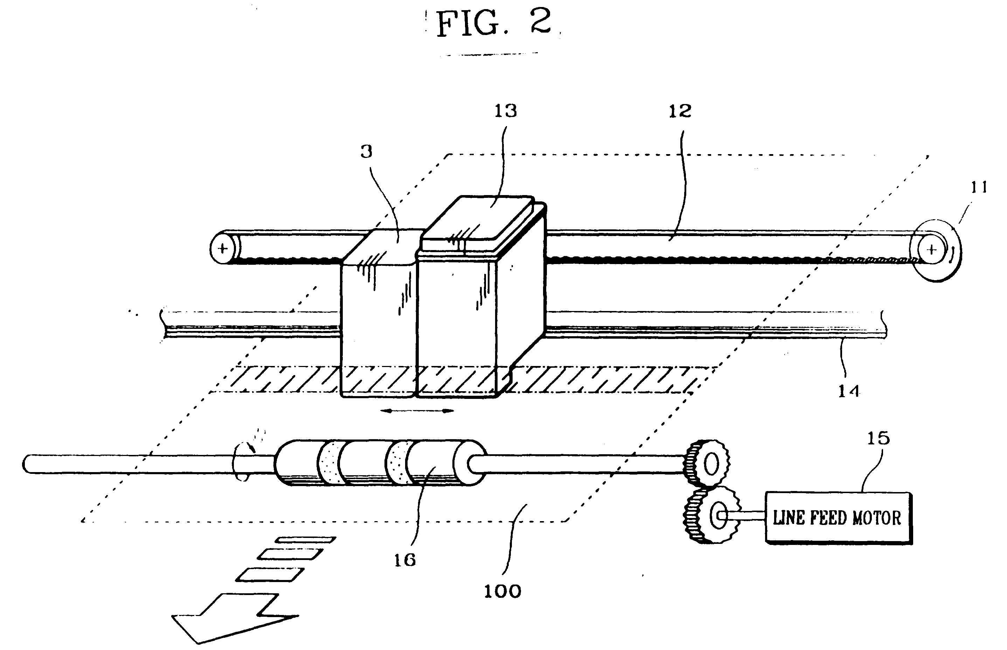

The overall operation of the conventional multi-tasking system is now described referring to FIG. 2.

Scanner module 3 and an ink cartridge module 13 each slide along a horizontal moving shaft 14 via a timing belt 12 and a carriage return motor 11. A document 100 is fed and discharged by a line feed roller 16 driven by a line feed motor 15.

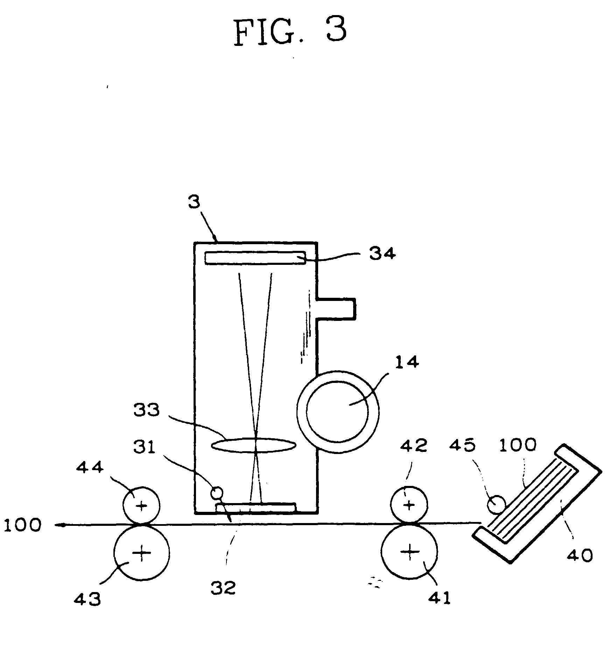

FIG. 3 is a side view of the shuttle scanner module of the multi-tasking system.

The shuttle scanner module may use the same driving system as that of an ink-jet head module.

Scanner module 3 and ink cartridge module 13, each secured to timing belt 12, are moved to right and left along the document surface of carriage return motor 11 for reading and printing image data. Document 100, held in a paper cassette 40, comes to be interposed between a drive roller 41 and a pinch roller 42 by a feed roller 45. After completing the scanning process of scanner module 3, document 100 is discharged by the rotating force of feed roller 43 and pinch roller 44.

According to the print mechanism, ink particles of the ink-jet head of ink cartridge module 13 are sprayed on document 100 while scanner module 3 and ink cartridge module 13 are moved to right and left.

In the scan mechanism, a lamp 31 in scanner module 3 applies light to document 100 while scanner module 3 and ink cartridge module 13 are moved to right and left. The light (the image data of the document), reflected onto the document surface, permeates a lens 33 passing through a scanner glass 32, and focuses on a charge coupled device (CCD) 34 to read out the image data. CCD 34 is a sensor for converting light energy into voltage, electrical energy.

A common-type scanner employs a white roller or white bar for all the regions to be scanned mechanically, and the rest of the document except its black data region is read out as white during printing without particular setting of a printing region.

Laser scanners generally employ the pre-scanning mechanism in order to achieve an actual scanning region, and scanning is carried out rapidly by a low 75 dpi resolution. After data is displayed on a monitor of a computer system, a user selects a scanning region.

In this sheetfeed scanning, the rest of a document except its scanning region is processed as white data, and there is no problem. When scanning with the multi-tasking system using a shuttle scanning, a print-out is in black Unless the pre-scan mechanism is used. A multi-tasking system that is a combination of a laser scanner, a printer and a facsimile, provides the performance of a stand-alone facsimile unit and copy machine cannot have the pre-scan mechanism. In this case, left and right parts of A4-sized print media are printed out in black, which causes unnecessary ink consumption and low print quality.

### SUMMARY OF THE INVENTION

An object of the present invention is to provide a method of discriminating a printing region of document in a multi-tasking system using a shuttle scanner module by which an actual text of document is scanned, thus preventing a black print-out.

Another object of the present invention is to provide a method of discriminating a printing region of document in a multi-tasking system using a shuttle scanner module, thereby preventing printing on the rest of the document other than its actual printing region, and reducing ink consumption.

Still another object of the present invention is to provide a method of discriminating a printing region of document in a multi-tasking system using a shuttle scanner module, for the purpose of enhancing the print quality.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the present invention provides a method of recognizing a printing region for a multi-tasking system using a shuttle scanner module, including the steps of scanning a first block of a document divided into a plurality of blocks; confirming a point of converting black data at a starting point into white data; detecting a point of starting white data of predetermined lines continuously input within a single block; and setting as a scanning starting point a value obtained by subtracting the white data starting point from the number of dots corresponding to a resolution and then adding l thereto. A point when white data of more than 12 lines are continuously input in a single shuttle block, is recognized as a scanning starting point.

It is to be understood that both the foregoing general description and the following detailed description are exemplary and explanatory and are intended to provide further explanation of the invention as claimed.

### BRIEF DESCRIPTION OF THE ATTACHED DRAWINGS

The accompanying drawings, which are included to provide a further understanding of the invention and are incorporated in and constitute a part of this specification, illustrate embodiments of the invention and together with the description serve to explain the principles of the drawings:

In the drawings:
FIG. 1 is a block diagram of a conventional multi-tasking system using a shuttle scanning module;
FIG. 2 schematically depicts the conventional multi-tasking system of FIG. 1;
FIG. 3 is a side view of the conventional multi-tasking system for showing the scanning process;
FIG. 4 depicts the control sequence of scanning a document divided into a plurality of blocks;
FIG. 5 is a view for scanning a single shuttle block of FIG. 4;
FIG. 6 depicts the control sequence of recognizing a paper size; and
FIGS. 7a and 7b each show a scanning region of a document in accordance with a conventional technique and that of the present invention.

### DETAILED DESCRIPTION OF PREFERRED EMBODIMENT

Reference will now be made in detail to the preferred embodiments of the present invention, examples of which are illustrated in the accompanying drawings.

A CCD sensor used for a shuttle scanner module employs 128 to 160 dots and scans A4 paper (2551 x 3507: 300 dpi) dividing into 22 to 27 shuttle blocks.

An ink-jet printing module consists of a print head 104 for 104 nozzles & 300 dpi printing, and divides paper into 34 printing blocks (2551 x 3507: 300 dpi). This resolution and the number of print nozzles are given by way of example, and the present invention is applicable to every module.

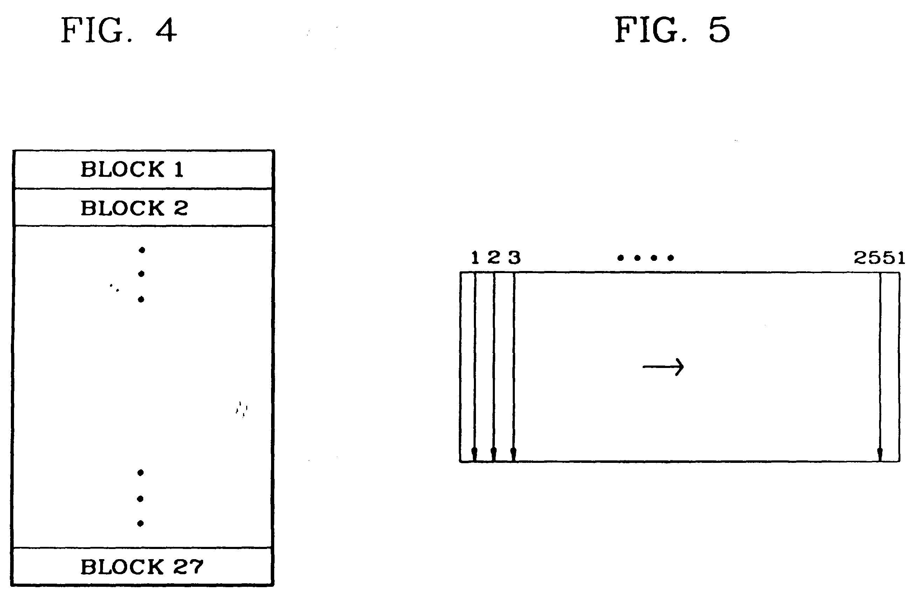

FIG. 4 depicts the control sequence of scanning a A4 document divided into 27 blocks. After scanning the first shuttle block, a point of converting black data at the starting point into white data is checked out. Scanning a single shuttle block is shown in FIG. 5. After scanning one vertical line (slice), the document is horizontally moved by a carriage return motor (A4 paper: 2551 & slice scanning: 300 dpi)

Whether or not white data of more than 12 lines in a single shuttle block is continuously input, is checked out, and a starting point of white data is set for a starting point for data scanning. The scanning starting point equals 2551 - continuous 12 line white data starting point + 1.

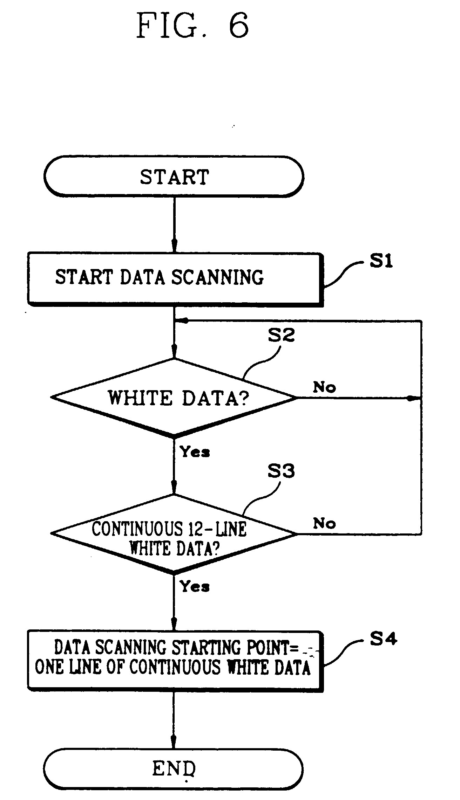

The control sequence of setting a data scanning starting point is depicted in FIG. 6. A method of setting a scanning region of one shuttle block includes the steps of checking (S1) if scanned data is white data during data scanning; determining (S2) if scanned data is white data or black data according to the size of reflected rays applied to the CCD sensor; when the data is white data, checking (S3) if the data is 12-line white data; and when the scanned data is 12-line white data, determining (S4) a data scanning starting point.
In step S3, the reason why the number of lines are set to 12 is that the actual width of 12 lines of data is about 1mm. In step S4, the data scanning starting point is obtained by subtracting one line point of continuous white data from 2551.

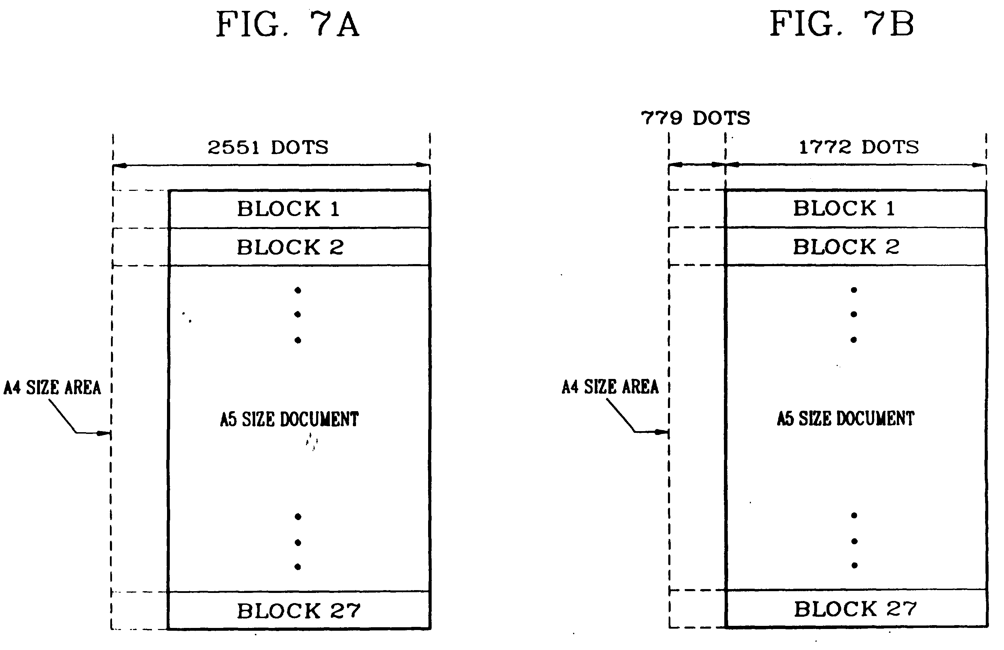

Each scanning starting point is checked at every block of 1st to 27th blocks in order to recognize the black data position more exactly. FIGS. 7a and 7b show the numbers of dots in A5 paper according to a conventional scanning and the inventive scanning, respectively.

According to the conventional scanning, a black background of a 779-dot region is read out, so the corresponding part is printed in black.

However, according to the inventive scanning, data sent to a region (779-dot region) other than A5 paper region of each block is nullified. That is, the data is regarded as a null, and only the data held in a 1772-dot region, sent from the 780-dot region, is printed out, thus preventing a black print-out of 779-dot region.

As described above, the present invention recognizes the paper size by checking a continous 12-line white data region in the shuttle scan mechanism. In the present invention, the data about the rest of document other than its text region is nullified and printing is carried out with respect to the actual text region of document, which minimizes unnecessary ink consumption and avoids paper damage.

## Claims

1. A method of recognizing a printing region, comprising the steps of:
scanning a first block of a document divided into a plurality of blocks;
confirming a point of converting black data at a starting point into white data;
detecting a point of starting white data of predetermined lines continuously input within a single block; and
setting as a scanning starting point a value obtained by subtracting the white data starting point from the number of dots corresponding to a resolution and then adding 1 thereto.

2. A method of recognizing a printing region according to claim 1, wherein a point when white data of more than 12 lines are continuously input in a single shuttle block, is recognized as a scanning starting point.
